Europäisches Patentamt

European Patent Office

Office européen des brevets

(19)

(11)  EP 1 510 768 A1

## (12)  EUROPEAN PATENT APPLICATION

(43) Date of publication:
    02.03.2005  Bulletin 2005/09

(51) Int Cl.$^7$: **F25D 21/00**, F24F 3/14,
    F24F 11/00

(21) Application number: 04255055.8

(22) Date of filing: 23.08.2004

(84) Designated Contracting States:
    **AT BE BG CH CY CZ DE DK EE ES FI FR GB GR
    HU IE IT LI LU MC NL PL PT RO SE SI SK TR**
    Designated Extension States:
    **AL HR LT LV MK**

(30) Priority: **27.08.2003 GB 0319971**

(71) Applicant: **EBAC LIMITED
    Bishop Auckland,
    County Durham DL14 9AL (GB)**

(72) Inventor: **Elliott, John Malcolm
    Co. Durham DL14 7QZ (GB)**

(74) Representative: **Craske, Stephen Allan et al
    Craske & Co.
    Patent Law Chambers
    15 Queens Terrace
    Exeter South Devon EX4 4HJ (GB)**

## (54)  Dehumidifier with a defrost control system

(57)   In a dehumidifier of the kind having a vapour compression circuit containing an evaporator 5 and a condenser 3, a temperature sensor 13 monitors the temperature of the evaporator and a control unit 11 takes temperature readings and starts a defrost period when the measured temperature reaches a calculated sub-zero temperature based on the operating temperature of the evaporator Water extraction therefore continues until icing up adversely affects the extraction rate.

Fig. 1

EP 1 510 768 A1

## Description

### TECHNICAL FIELD OF THE INVENTION

This invention relates to dehumidifiers of the kind having a vapour compression circuit containing an evaporator and a condenser.

### BACKGROUND

When dehumidifiers operate in an environment having an ambient temperature below about 18°C the temperature of the evaporator coil falls below 0°C and hence the extracted water freezes. Therefore the dehumidifier must periodically enter a defrost phase (at approximately hourly intervals).

The defrost phase can be achieved in various ways. Some dehumidifiers employ a passive defrost system which simply switches off the compression circuit allowing the ambient air to melt the ice. Another method is to reverse the air flow through the dehumidifier so that the incoming air is warmed by the condenser before passing over the evaporator. Other known defrost methods include a) bleeding hot refrigerant gas from the condenser to the evaporator, and b) reversing the refrigeration circuit so that the evaporator becomes the condenser and vice versa.

To optimise water extraction it is desirable to vary the time between the defrost phases depending on ambient conditions. As relative humidity (RH) increases the rate at which the evaporator ices up will rise so that the time between defrost periods should be reduced. The amount of time required for defrosting depends on the energy available to melt the ice and the amount of ice which has built up.

Known dehumidifiers have predetermined times for the dehumidifying and defrost phases which are selected according to ambient temperature. However, these times must be set conservatively to take account of variations caused by climatic conditions or operating variables between different dehumidifiers, so that the operating efficiency in terms of the amount of water extracted is usually less than optimum.

It is also known to provide a temperature sensor to sense the operating temperature of the evaporator. When the evaporator reaches 0°C a timer is started, and at the end of a fixed timing period the dehumidifier enters the defrost phase. The dehumidifying re-commences when the evaporator temperature rises above zero, when most of the ice will have melted, or at the end of a fixed defrost period. Although this has a certain amount of feedback to provide information on the running conditions of the dehumidifier, the timing periods must still be set to cover the worst circumstances.

The present invention seeks to provide a new and inventive form of dehumidifier which is capable of improved water extraction over a broad range of operating conditions.

### SUMMARY OF THE INVENTION

The present invention proposes a dehumidifier of the kind having a vapour compression circuit containing an evaporator and a condenser and arranged to operate with alternating water extraction and defrost phases, the dehumidifier including:

- a temperature sensor arranged to monitor the operating temperature of the evaporator, and
- control means for controlling the duration of the water extraction and defrost phases;

*characterised in that* the control means calculates the sensed evaporator temperature at which each defrost phase commences taking into account information provided by the evaporator temperature sensor prior to the commencement of said defrost phase.

Rather than simply entering the defrost phase when predetermined fixed conditions are achieved the control means uses the temperature information provided by the evaporator temperature sensor to calculate the optimum conditions under which defrosting should begin. A small amount of icing up can normally be tolerated since water extraction will still take place. Accordingly, the conditions can be chosen so that defrosting does not commence until the build up of ice becomes large enough to adversely affect the extraction rate.

Various schemes for determining the commencement of the defrost phase can be used. For example, the control means can read a reference temperature from the evaporator sensor during a water extraction phase, when the vapour compression circuit has reached stable operating conditions but has not been running long enough for icing up to start. The defrost phase can then commence when the evaporator temperature reaches a predetermined temperature below the reference value. However, in a preferred scheme the control means takes temperature readings at predetermined intervals and calculates the rate of fall of the evaporator temperature. The defrost phase begins when the calculated rate of temperature fall exceeds a predetermined figure.

The control means may be arranged to end the defrost period and commence water extraction when the sensed temperature of the evaporator rises to a positive temperature value.

### DEFINITIONS

In this context, a "positive temperature" means a temperature which is above the freezing point of water and a "negative temperature" is a temperature which is below the freezing point of water, i.e. above or below 0°C respectively.

BRIEF DESCRIPTION OF THE DRAWINGS

The following description and the accompanying drawings referred to therein are included by way of non-limiting example in order to illustrate how the invention may be put into practice. In the drawings:

Figure 1 is a schematic diagram of a dehumidifier in accordance with the invention; and

Figure 2 is a graph showing how the evaporator temperature (y axis) varies with time during the water extraction and defrost phases (x axis).

DETAILED DESCRIPTION OF THE DRAWINGS

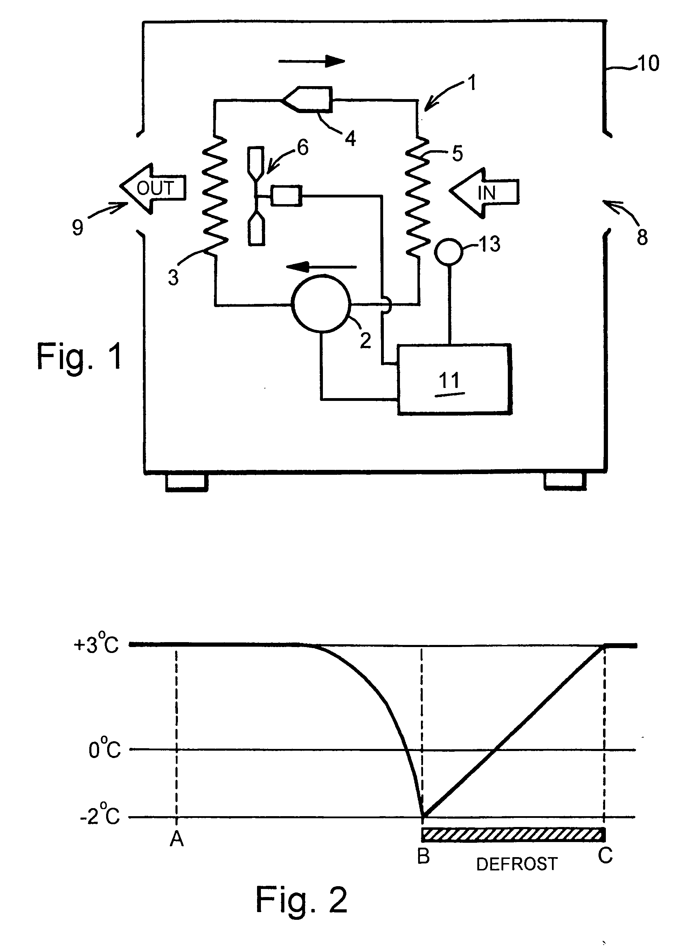

The dehumidifier shown in Fig. 1 incorporates a vapour compression circuit 1 in which a compressor 2 circulates refrigerant vapour under pressure through a condenser 3 wherein the refrigerant condenses and gives out heat. Condensed refrigerant then passes through an expansion device such as a valve or small bore tube 4 providing a restriction which reduces the temperature and pressure of the refrigerant entering evaporator coils 5. Vaporisation of the refrigerant in the evaporator 5 absorbs heat from ambient air so that the resulting temperature drop causes water vapour in the air to condense out on the surfaces of the evaporator coils. The ambient air is drawn into the dehumidifier by a fan 6, and after passing over the evaporator coils the air passes over the condenser to receive heat from the refrigerant so that the dehumidifier discharges warm air into the external environment. Refrigerant vapour from the evaporator coils is re-circulated by the compressor 2 in a continuous cycle of condensation and evaporation.

The components of the vapour compression circuit are normally contained within a portable housing 10 having an ambient air inlet 8 and a dehumidified air outlet 9.

The operation of the dehumidifier (fan 6, compressor 2 etc.) is controlled by an electronic controller 11, which also receives input from a temperature sensor 13 arranged to monitor the temperature of the evaporator 5. The controller 11 will typically employ a microprocessor which periodically reads the data from the temperature sensor 13 and operates the fan and/or compressor such that the dehumidifier operates with alternate water extraction and defrost periods. Passive defrosting may be achieved by turning off the compressor 2. Alternatively active defrosting can take place by reversing the fan 6 with the compressor still running.

When the ambient temperature falls below about 18°C the evaporator will start to ice up during the water extraction phase. The rate of ice formation depends on various factors such as the RH in the vicinity of the dehumidifier. Initially, the ice formation will not adversely affect the rate of water extraction to a significant extent, but as the ice builds up the extraction rate will fall.

Fig. 2 shows the typical operating temperature of the evaporator. For purposes of illustration the time scale along the x axis is not linear. At time A, approximately 10 minutes after the dehumidifier has initially been switched on, or following the end of a defrost period, the temperature of the evaporator has stabilised at about 3°C, depending upon environmental conditions. However, as water extraction continues the temperature will fall below freezing when ice formation commences. The controller 11 reads the sensor 13 at intervals (typically every 10 minutes) and calculates the rate of fall. This may for example be calculated using the formula:

$$R = (T_{old} - T_{new}) / t$$

where R is the rate of fall, $T_{old}$ is the last temperature reading, $T_{new}$ is the most recent temperature reading, and t is the time interval between readings.

As icing up progresses the rate of temperature fall will increase. When the rate of fall reaches approximately 2°C in ten minutes the controller places the dehumidifier into defrost mode (time B in **Fig. 2**).

The controller therefore uses the temperature information provided by the evaporator temperature sensor to calculate the optimum conditions under which defrosting should begin, namely when the amount of icing up is materially affecting the water extraction rate. Under conditions of high RH this condition may be reached relatively quickly, but under low RH conditions water extraction may continue for a substantial period even though there is some icing up of the evaporator. Eventually, however, the ice build up will become sufficient to reduce air flow through the dehumidifier and the layer of ice will act as an insulator further reducing heat transfer. The reduced heat transfer to the low pressure refrigerant liquid entering the evaporator will cause a measurable drop in the temperature and pressure of the refrigerant so that the sensed temperature of the evaporator will again fall at a sufficient rate to trigger a defrost period.

The controller preferably ends the defrost period and re-commences water extraction when the sensed temperature of the evaporator exceeds 0°C. In practice it is desirable to end the defrost period when the temperature rises above about 3°C to allow a small margin for error. (Time C in **Fig. 2**.) This ensures that all of the ice has been removed and the conditions are suitable for obtaining an optimum water extraction period.

When the dehumidifier operates at low ambient temperatures approaching 3°C it is possible that the coil temperature will not rise enough to trigger the end of a defrost period, so the controller could still apply a maximum defrost period of say 30 minutes. Normal running would re-commence when this period expires if not previously triggered by a rise in evaporator temperature.

The controller therefore acts to optimise the duration of the water extraction and defrost phases as described, and therefore maximises water extraction under a wide range of environmental operating conditions.

In a modification of the system described above the controller 11 could read a reference temperature from the evaporator sensor 13 during a water extraction phase at time A, when the vapour compression circuit has reached stable operating conditions but has not been running long enough for icing up to start. The controller can then start the defrost phase when the evaporator temperature reaches a calculated negative temperature of say 5°C below the reference value i.e. when the evaporator temperature drops to -2°C. Under normal circumstances this would achieve the same results as monitoring the rate of temperature fall. One drawback is that if the dehumidifier is switched off for a short period immediately before a defrost period and then switched back on the measured reference temperature will be lower and the calculated temperature for triggering a defrost period may be too low. However, this could be allowed for by arranging the controller to always trigger a defrost after a long continuous running period (e.g. two hours maximum) provided the evaporator temperature is below 0°C. Another method may be to vary the temperature at which defrosting is triggered depending on the sensed reference temperature. Thus, a relatively high reference temperature will require a larger temperature drop before defrost commences whereas reference temperatures closer to freezing will require a smaller temperature drop to start the defrost process.

It will be appreciated that the features disclosed herein may be present in any feasible combination. Whilst the above description lays emphasis on those areas which, in combination, are believed to be new, protection is claimed for any inventive combination of the features disclosed herein.

## Claims

1. A dehumidifier of the kind having a vapour compression circuit containing an evaporator and a condenser and arranged to operate with alternating water extraction and defrost phases, the dehumidifier including:

   - a temperature sensor arranged to monitor the operating temperature of the evaporator, and
   - control means for controlling the duration of the water extraction and defrost phases;

   *characterised in that*
   the control means calculates the sensed evaporator temperature at which each defrost phase commences taking into account information provided by the evaporator temperature sensor prior to the commencement of said defrost phase.

2. A dehumidifier according to Claim 1, in which the control means is arranged to read a reference temperature from the said sensor during a water extraction phase and starts the defrost phase when the evaporator temperature reaches a calculated temperature below the reference temperature.

3. A dehumidifier according to Claim 2, in which the calculated temperature at which the defrost phase is set to commence is a fixed amount below the reference temperature reading.

4. A dehumidifier according to Claim 1, in which the control means is arranged to take temperature readings from the said sensor at predetermined intervals and calculate the rate of fall of the evaporator temperature, starting the defrost phase when the calculated rate of temperature fall exceeds a predetermined figure.

5. A dehumidifier according to any preceding claim, in which the control means is arranged to end the defrost period and commence water extraction when the sensed temperature of the evaporator rises to a positive temperature value.

Fig. 1

Fig. 2

**European Patent Office**

**EUROPEAN SEARCH REPORT**

Application Number

EP 04 25 5055

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 373 349 A (MUELLER DALE A) 15 February 1983 (1983-02-15) * column 1, line 35 - line 66 * | 1-3 | F25D21/00 F24F3/14 F24F11/00 |
| Y | * abstract * ----- | 1-3 | |
| Y | US 5 797 273 A (GUO ZHICHAO  ET AL) 25 August 1998 (1998-08-25) * abstract * ----- | 1-3 | |
| A | US 4 209 994 A (MUELLER DALE A  ET AL) 1 July 1980 (1980-07-01) * abstract * ----- | 1 | |
| A | US 4 406 133 A (KROCKER ROBERT E  ET AL) 27 September 1983 (1983-09-27) * abstract * ----- | 1 | |
| A | EP 1 030 137 A (RANCO INC) 23 August 2000 (2000-08-23) * abstract * ----- | 1 | |
| A | US 4 590 771 A (DELLINGER WAYNE D  ET AL) 27 May 1986 (1986-05-27) * abstract * ----- | 1 | TECHNICAL FIELDS SEARCHED (Int.Cl.7) F25D F24F F25B |
| A | US 5 727 395 A (PHILLIPS THOMAS R  ET AL) 17 March 1998 (1998-03-17) * abstract * ----- | 1 | |

The present search report has been drawn up for all claims

| Place of search | Date of completion of the search | Examiner |
|---|---|---|
| Munich | 2 November 2004 | Valenza, D |

EPO FORM 1503 03.82 (P04C01)

**ANNEX TO THE EUROPEAN SEARCH REPORT
ON EUROPEAN PATENT APPLICATION NO.**

EP 04 25 5055

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2004

| Patent document cited in search report | | Publication date | Patent family member(s) | | Publication date |
|---|---|---|---|---|---|
| US 4373349 | A | 15-02-1983 | CA | 1165576 A1 | 17-04-1984 |
| | | | JP | 58008938 A | 19-01-1983 |
| | | | JP | 63064698 B | 13-12-1988 |
| US 5797273 | A | 25-08-1998 | AU | 724685 B2 | 28-09-2000 |
| | | | AU | 6027298 A | 08-09-1998 |
| | | | BR | 9805986 A | 31-08-1999 |
| | | | CN | 1217782 A | 26-05-1999 |
| | | | CN | 1217782 T | 26-05-1999 |
| | | | DE | 69814752 D1 | 26-06-2003 |
| | | | DE | 69814752 T2 | 25-03-2004 |
| | | | EP | 0894228 A1 | 03-02-1999 |
| | | | ES | 2194304 T3 | 16-11-2003 |
| | | | IL | 126537 A | 30-04-2001 |
| | | | JP | 2000509138 T | 18-07-2000 |
| | | | PT | 894228 T | 31-10-2003 |
| | | | WO | 9836227 A1 | 20-08-1998 |
| US 4209994 | A | 01-07-1980 | CA | 1123494 A1 | 11-05-1982 |
| | | | JP | 1352099 C | 11-12-1986 |
| | | | JP | 55060149 A | 07-05-1980 |
| | | | JP | 61021342 B | 27-05-1986 |
| US 4406133 | A | 27-09-1983 | US | 4338790 A | 13-07-1982 |
| EP 1030137 | A | 23-08-2000 | EP | 1030137 A1 | 23-08-2000 |
| | | | AU | 3424200 A | 04-09-2000 |
| | | | WO | 0049350 A1 | 24-08-2000 |
| | | | EP | 1157245 A1 | 28-11-2001 |
| US 4590771 | A | 27-05-1986 | NONE | | |
| US 5727395 | A | 17-03-1998 | AU | 724877 B2 | 05-10-2000 |
| | | | AU | 5927898 A | 08-09-1998 |
| | | | BR | 9805984 A | 31-08-1999 |
| | | | CN | 1217781 A | 26-05-1999 |
| | | | CN | 1217781 T | 26-05-1999 |
| | | | DE | 69817277 D1 | 25-09-2003 |
| | | | DE | 69817277 T2 | 09-06-2004 |
| | | | EP | 0894227 A1 | 03-02-1999 |
| | | | ES | 2201436 T3 | 16-03-2004 |
| | | | IL | 126536 A | 30-04-2001 |
| | | | JP | 2000509808 T | 02-08-2000 |
| | | | PT | 894227 T | 31-12-2003 |
| | | | WO | 9836228 A1 | 20-08-1998 |

EPO FORM P0459

For more details about this annex : see Official Journal of the European Patent Office, No. 12/82